(19) Europäisches Patentamt
European Patent Office
Office européen des brevets

(11) EP 3 779 408 A1

(12) EUROPÄISCHE PATENTANMELDUNG

(43) Veröffentlichungstag:
17.02.2021  Patentblatt 2021/07

(51) Int Cl.:
G01N 21/31 (2006.01)    G01N 21/33 (2006.01)

(21) Anmeldenummer: 19191934.9

(22) Anmeldetag: 15.08.2019

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: optek-Danulat GmbH
45356 Essen (DE)

(72) Erfinder:
• Platte, Daniel
  42555 Velbert (DE)
• Schroeren, Peter
  47906 Kempen (DE)

(74) Vertreter: Schneider, Sascha et al
Becker & Müller
Patentanwälte
Turmstraße 22
40878 Ratingen (DE)

(54) MESSVORRICHTUNG UND VERFAHREN ZUR BESTIMMUNG EINER STOFFKONZENTRATION

(57) Die vorliegende Erfindung betrifft eine Messvorrichtung zur Bestimmung einer Stoffkonzentration eines in einem Messvolumen (4) angeordnetes Fluids mit:
- einer ein Quellspektrum ausgebenden Quelle (1),
- einem vor dem Messvolumen angeordneten wellenlängenselektiven Mittel,

- einem das Messvolumen (4) zumindest in einem Strahlengang (7) begrenzenden Messraum und
- einem Detektor (6) zur Messung einer wellenlängenbezogenen Absorption eines durch das Messvolumen (4) getretenen Messspektrums,
wobei zwischen dem Detektor (6) und dem Messvolumen (4) ein fluoreszenzreduzierendes Element (5) im Strahlengang (7) angeordnet ist, wobei zwischen der Quelle (1) und dem Messvolumen (4) ein Strahlenteiler angeordnet ist.

Weiterhin betrifft die vorliegende Erfindung ein korrespondierendes Verfahren.

FIG.1

**Beschreibung**

Die vorliegende Erfindung betrifft eine Messvorrichtung zur Bestimmung einer Stoffkonzentration eines in einem Messvolumen angeordneten Fluids gemäß Anspruch 1 und ein korrespondierendes Verfahren gemäß Anspruch 9.

Bei der Prozesssteuerung sowie in der Qualitätssicherung von Produkten spielen gattungsgemäße Messvorrichtungen und Verfahren sowohl im Labor- als auch im Prozessmaßstab eine große Rolle. Dabei ist die Messgenauigkeit in einem möglichst großen Konzentrationsbereich des zu messenden Stoffes wichtig. Eine ebenso große Rolle spielt es, dass die Messgenauigkeit über einen langen Messzeitraum aufrechterhalten bleibt, so dass eine Kalibrierung der Messvorrichtung möglichst selten bis gar nicht erforderlich ist.

In der Biotechnologie finden Absorptionsmessungen vor allem zur Bestimmung der Konzentration von Nukleinsäuren sowie zur Bestimmung der Proteinkonzentration oder der Konzentration von Aminosäuren Anwendung. Letztere kommt beispielsweise bei der chromatographischen Trennung von Proteinlösungen zum Einsatz. Dabei entstehen insbesondere Produktströme, in welchen die zu bestimmende Substanz zu unterschiedlichen Zeiten in unterschiedlicher Konzentration enthalten ist. Durch die Absorptionsmessung wird beispielsweise eine Selektion im Hinblick auf Konzentration und/oder Verunreinigungen aufgrund der Messergebnisse gesteuert.

Für die Messvorrichtung, in der Regel ein Prozessphotometer, wird daher ein möglichst dynamischer und breiter Messbereich gefordert. Außerdem werden eine gute Reproduzierbarkeit der Messungen sowie eine gute Vergleichbarkeit unterschiedlicher Messstellen bevorzugt. Um aussagefähige Messergebnisse zu erlangen, deren Fehlerabschätzungen möglichst schmale Toleranzbänder ergeben, sind neben der guten Reproduzierbarkeit und Unabhängigkeit von Störeinflüssen auch eine gute Vergleichbarkeit der Messungen im Prozess mit denen im Labormaßstab sowie insbesondere eine gute Linearität zwischen der Stoffkonzentration und der Absorption gewünscht.

Ebenso ist es von Vorteil, wenn statt der eigentlich zu messenden Substanz für die Zwecke der Gerätekalibrierung eine Ersatzsubstanz eingesetzt werden kann. Dies ist besonders dann von Vorteil, wenn die zu vermessende Substanz teuer ist, eine schlechte Beständigkeit aufweist oder diese allgemein schlecht handhabbar ist.

Aufgabe der vorliegenden Erfindung ist es daher, eine Messvorrichtung und ein Verfahren zur Bestimmung einer Stoffkonzentration anzugeben, die eine möglichst genaue und langfristig reproduzierbare Messung ermöglichen.

Die vorgenannten technischen Probleme werden insbesondere mit einer Messvorrichtung gemäß Anspruch 1 und/oder einem Verfahren gemäß Anspruch 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, unerwünschte Einflüsse eines Quellspektrums auf die Messung/Bestimmung der Stoffkonzentration zu minimieren. Dies erfolgt erfindungsgemäß insbesondere durch Anordnung eines fluoreszenzreduzierenden Elements im Strahlengang, vorzugsweise zwischen dem Detektor und dem Messvolumen und Begrenzung der Einstrahlung in das Messvolumen, insbesondere der Strahlung mit zur Messwellenlänge abweichender Wellenlänge, vorzugsweise kurzwelligeren Strahlung. Die erfindungsgemäße Messvorrichtung und das erfindungsgemäße Verfahren werden daher bevorzugt bei Fluiden verwendet, die auf das, insbesondere schmalbandige, Quellspektrum und/oder die Messwellenlänge fluoreszierend ansprechen.

Messwellenlänge oder Messwellenlängenbereich werden nachfolgend als alternative Bezeichnungen verwendet, sollen aber jeweils beides betreffen. Als Messspektrum wird erfindungsgemäß das Spektrum angesehen, das ohne Beeinflussung durch eine zu messende Substanz in dem Messvolumen an einem Detektor ankommt.

Insbesondere können mehrere Messwellenlängen durch den Detektor detektiert werden. Es können auch mehrere Detektoren für zur Detektion der mindestens einen Messwellenlänge verwendet werden.

Erfindungsgemäß ist zwischen der Quelle und dem Messvolumen mindestens ein Strahlteiler angeordnet. Dieser ist insbesondere als teilreflektierende Schicht oder vollreflektierend Schicht oder wellenlängensensitiv ausgebildet. Insbesondere kann ein wellenlängensensitiver Strahlteiler auch die Funktion der Fluoreszenzreduktion erfüllen.

Ein Strahlteiler ist ein optisches Bauelement, das einen Lichtstrahl in zwei Teilstrahlen trennt. Ein sehr einfacher Strahlteiler ist beispielsweise eine Glasscheibe, die in einem Winkel von 45° in den Strahlengang eingebracht wird. Ein Teil des Lichts wird an der Oberfläche der Scheibe im Winkel von 90° reflektiert, ein weiterer Teil durchdringt die Scheibe. Durch Aufbringung einer geeigneten teilreflektierenden Beschichtung auf die Oberfläche der Scheibe kann der Strahl auf diese Weise in zwei Strahlen gleicher Intensität geteilt werden (halbdurchlässiger Spiegel).

Insbesondere besteht der Strahlteiler aus zwei Prismen, die an ihrer Basis (z. B. mit Kanadabalsam) zusammengefügt werden. Das Prinzip, nach dem ein Strahlteilerwürfel funktioniert, ist die verhinderte Totalreflexion. Das Teilungsverhältnis ist daher abhängig von der Wellenlänge des Lichts.

Neben nicht-polarisierenden Strahlteilern gibt es auch polarisierende Strahlteiler (auch Polwürfel genannt). Das Teilungsverhältnis wird hier durch den Polarisationswinkel des eintretenden Lichts bestimmt.

Bevorzugt nutzen mehrere Messwellenlängen den gleichen Strahlengang und denselben Detektor, wobei die unterschiedlichen Messwellenlängen das Messvolumen zeitlich verschachtelt durchdringen. Insbesondere durchdringen die unterschiedlichen Messwellenlängen das Messvolument an unterschiedlichen Orten (z.B. Austritt mehrerer Lichtwellenleiter.

Bevorzugt werden flexible Lichtwellenleiter verwendet, allerdings sind auch starre Lichtwellenleiter, insbesondere lineare Anordnungen, möglich.

Falls mehrere Messwellenlängen verwendet werden, sind die Pfadlängen im Messvolumen bevorzugt gleich lang.

Die ins Messvolumen eingestrahlte Leistung ist insbesondere modulierbar z.B. durch mechanische (Chopper, Chopperspiegel), elektrooptische (Flüssigkristallanordnungen, Pockels-Zelle), elektromechanische und/oder elektrische Mittel (Betriebsstrom der Quelle (LED)). Das Modulationsschema kann deterministisch, teilweise zufällig oder pseudozufällig sein. Das bezieht sich sowohl auf einzelne Messwellenlängen als auch auf die Intensitätsfolge verschiedener Wellenlängen.

Bevorzugt ist die Intensität der Messstrahlung zwischen der Quelle und dem Messvolumen zeitweise oder dauerhaft, insbesondere während die Messwellenlänge im Messdetektor detektiert wird, messbar. In Abhängigkeit der gemessenen Intensität ist die Quellintensität auf einen vorgegebenen Wert (fest oder zeitlich veränderlich (Modulation)) regelbar, wobei die Messwerte in Abhängigkeit von Vorgabewerten und/oder den Messwerten normierbar sind.

Bevorzugt sind zumindest einige der Komponenten der Messvorrichtung voneinander räumlich derart getrennt angeordnet, um eine Wechselwirkung mit der Umgebung zu steuern, Temperatureinflüsse des Prozessmediums auf die Messtechnik, Temperatureinflüsse der Messtechnik auf das Medium, und elektromagnetische Einflüsse auf empfindliche Detektorschaltungen zu vermeiden, zumindest zu reduzieren, sowie elektrische Zündquellen von einer explosionsgefährdeten Atmosphäre zu trennen.

Erfindungsgemäß bevorzugt wird eine optische Bestimmung, insbesondere mit einer elektromagnetischen Strahlung im Messwellenlängenbereich zwischen 100nm und 5μm. Entsprechend dem Lambert-Beerschen Gesetz ist der (dekadische) Logarithmus des Quotienten aus transmittierter (Lt) und eingestrahlter (L0) Lichtleistung bei einer gegebenen Schichtdicke D bei jeder Wellenlänge proportional zu der Stoffkonzentration c (insbesondere Teilchenzahl pro Volumen, beispielsweise mol/1):

$$A (Lamda) = log10 (L0/Lt) = k*c*D$$

Die Proportionalitätskonstante k wird nachfolgend Absorptionskoeffizient genannt. Der in obiger Gleichung dargestellte Zusammenhang gilt für fast alle Substanzen über einen breiten Konzentrationsbereich. Durch die Verwendung der logarithmisch skalierten Verhältniszahl A ergibt sich ein linearer Zusammenhang zwischen dieser Größe und dem stoffabhängigen Absorptionskoeffizienten k, der Stoffkonzentration c und der Schichtdicke D. Der Zusammenhang gilt insbesondere, wenn eingestrahltes und transmittiertes Licht die gleiche Wellenlänge haben und keine Streuung des Lichts im Messvolumen stattfindet. Die praktische Messung von A setzt voraus, dass die gesamte optische Strahlung eine annähernd gleiche Strecke im Messvolumen zurücklegt. Es ist daher erfindungsgemäß bevorzugt, wenn das Messvolumen in Strahlengangrichtung von planparallelen Fenstern begrenzt wird und/oder ein von einer Messquelle ausgegebener Messstrahl näherungsweise parallel verläuft, also insbesondere nicht streuend.

Der vorliegenden Erfindung liegt insbesondere die Erkenntnis zugrunde, dass sich bei in dem zu messenden Fluid enthaltenden Stoffen mit fluoreszierenden Eigenschaften, insbesondere sich zeitlich ändernde, Störeinflüsse auf das Messspektrum ergeben. Bei einer erfindungsgemäß bevorzugten Bestimmung einer Stoffkonzentration von Tryptophan enthaltenden Proteinen entsteht bei einer Messwellenlänge von 280nm ein ausgedehntes Fluoreszenzlicht mit einem Maximum bei circa 350nm.

Hierdurch kann es zu Störungen bei der Detektion und dadurch zu Störungen bei der Bestimmung der Stoffkonzentration kommen.

Der beschriebene Effekt wird vor allem bei hohen Konzentrationen und/oder größeren Schichtdicken stärker bemerkbar, insbesondere bei einer Schwächung des Lichts bei der Messwellenlänge um mehr als zwei Größenordnungen. Weiterhin hängt die Fluoreszenzausbeute von der Temperatur und Umgebung des Moleküls ab und kann durch andere Stoffe gestört werden. Bei unterschiedlichen Konzentrationen ergeben sich daher Abweichungen von der Linearität der Messung, so dass die Messergebnisse weniger reproduzierbar und skalierbar sind.

Kern der vorliegenden Erfindung ist daher insbesondere die Messung der spektralen Absorption zur Bestimmung einer Stoffkonzentration, wobei im Strahlengang sowohl vor als auch nach dem Messvolumen wellenlängenselektive Mittel/Bauteile angeordnet sind.

Wellenlängenselektive Mittel/Bauteile zeichnen sich erfindungsgemäß insbesondere dadurch aus, dass durch sie Strahlung des Quellspektrums in unerwünschten Wellenlängenbereichen, also insbesondere außerhalb der Messwellenlänge, stärker reduziert wird als in dem erwünschten Wellenlängenbereich.

Auf der Einstrahlungsseite, also im Strahlengang vor dem Messvolumen, sind wellenlängenselektive Mittel angeordnet, durch die schädliche Strahlung des Quellspektrums, insbesondere in einem gegenüber der Messwellenlänge kurzwelligen Bereich, reduziert wird. Durch diese erfindungsgemäße Maßnahme wird das im Messvolumen angeordnete Fluid möglichst wenig mit Strahlung belastet.

Durch die nach dem Messvolumen in dem Strahlengang angeordneten wellenlängenselektiven Mittel wird, insbesondere durch die Messwellenlänge im Messvolumen angeregtes, Fluoreszenzlicht reduziert/absorbiert, um eine lineare und reproduzierbare Messung über einen breiten Stoffkonzentrationsbereich sicherzustellen.

Das hinter dem Messvolumen angeordnete wellenlängenselektive Mittel kann insbesondere ein fluoreszenzreduzierendes Element sein. Bei dem fluoreszenzreduzierenden Element handelt es sich vorzugsweise um einen Interferenzfilter mit mehr als 10% Transmission, insbesondere mehr als 20% Transmission, bevorzugt mehr als 30% Transmission, einer Mittelwellenlänge von 280nm und einer Halbwertsbreite von maximal 40nm, bevorzugt maximal 20nm, noch bevorzugter zwischen 9 und 15nm.

Durch die vor und nach dem Messvolumen angeordneten wellenlängenselektiven Mittel und/oder weitere wellenlängenselektive Mittel/Bauteile wird das Quellspektrum auf die Messwellenlänge konzentriert, weist also bevorzugt bei der Messwellenlänge ein Maximum auf. Bevorzugt wird dabei eine Messwellenlänge, bei der die Absorption der zu messenden Stoffkonzentration des Stoffes möglichst hoch ist, insbesondere ein lokales Maximum aufweist.

Die weiteren wellenlängenselektiven Mittel/Bauteile können insbesondere durch Ausbildung der Quelle als schmalbandige Lichtquelle und/oder einen zusätzlichen, bevorzugt dem Messvolumen nachgelagerten, im Strahlengang angeordneten Filter, gebildet sein.

Bevorzugt wird die spektrale Verteilung der Messstrahlung im wesentlichen durch das vor dem Messvolumen angeordnete wellenlängenselektive Mittel, insbesondere einen Monochromator mit einer Messwellenlänge von 280nm und einer Halbwertsbreite von maximal 5nm, bestimmt.

Gemäß einer vorteilhaften Ausführungsform der vorliegenden Erfindung wird die Intensität der Messstrahlung durch das nach dem Messvolumen angeordnete wellenlängenselektive Mittel höchstens um einen Faktor 10, vorzugsweise höchstens um einen Faktor 5, reduziert. Das Fluoreszenzlicht wird dagegen bevorzugt mindestens um einen Faktor 20, vorzugsweise mindestens um einen Faktor 50, noch bevorzugter mindestens um einen Faktor 100 reduziert.

Ein erfindungsgemäß bevorzugtes wellenlängenselektives Mittel zur Wellenlängenselektion vor dem Messvolumen ist eine, insbesondere ein schmalbandiges Quellspektrum ausgebende, Quelle. Die Wellenselektion kann durch Vorsehen einer schmalbandigen Lichtquelle erfolgen, insbesondere einer oder mehrerer der nachfolgend genannten Lichtquellen:

- LEDs,
- Niederdruckgasentladungslampen,
- Laser, vorzugsweise durchstimmbare.

Alternativ kann die Quelle eine breitbandige Lichtquelle mit einem nachgeschalteten wellenlängenselektiven Zwischenelement aufweisen, insbesondere eines der folgenden:

- mindestens ein Beugungsgitter und/oder
- mindestens einen Interferenzfilter.

Als breitbandige Quelle kommen erfindungsgemäß insbesondere folgende in Frage:

- Glühlampen,
- Plasmaquellen,
- Gasentladungslampen.

Gemäß einer Ausführungsform der vorliegenden Erfindung ist es denkbar, eine Kombination von Linienquellen mit zusätzlichen wellenlängenbestimmenden Elementen vorzusehen. Die optischen Elemente sind insbesondere diskret hintereinander aufgebaut. Es ist alternativ oder zusätzlich insbesondere denkbar, eine räumliche Trennung herbeizuführen und die optische Strahlung (Quellspektrum) zwischen einzelnen Komponenten über Lichtleitelemente, insbesondere Lichtleitfasern, Linsenleitungen und/oder Leitungen mit Gradientenindexlinsen, zu führen.

Gemäß einer weiteren vorteilhaften Ausführungsform der vorliegenden Erfindung ist die Messvorrichtung zur Bestimmung der Absorption auf die in das Messvolumen eingestrahlte Intensität normierbar oder normiert. Dies erfolgt insbesondere, indem das Messvolumen mit einem nicht absorbierenden Referenzfluid gefüllt wird, um einen oder mehrere Referenzwert(e) für das Messspektrum aufzunehmen.

Gemäß einer weiteren, vorteilhaften Ausführungsform der Erfindung ist es denkbar, die eingestrahlte Intensität in zeitlichen Intervallen oder dauernd zu überwachen, um zeitliche Veränderungen der eingestrahlten Intensität berücksichtigen zu können. Dies kann insbesondere über ein Umleiten des Quellspektrums erfolgen, insbesondere über einen Chopperspiegel.

Das erfindungsgemäß nachgeschaltete wellenlängenselektive Bauteil ist bevorzugt ein fluoreszenzreduzierendes Element. Bevorzugt wird ein Filter verwendet, welches die vom Detektor zu messende Messwellenlänge deutlich weniger beeinflusst als gegenüber der Messwellenlänge langwelligere Strahlung. Das fluoreszenzreduzierende Element weist bei der Messwellenlänge bevorzugt eine Absorption von weniger als 50%, noch bevorzugter weniger als 20%, auf. Das fluoreszenzreduzierende Element weist dagegen in dem Wellenlängenbereich, in welchem eine Fluoreszenzemission angeregt würde, eine möglichst hohe Absorption auf. Erfindungsgemäß denkbar ist es außerdem, mehrere Messwellenlängen und mehrere Bereiche zur Fluoreszenzreduzierung und/oder ein Element mit durchstimmbarem Durchlassbereich im Strahlengang anzuordnen.

Gemäß einer weiteren vorteilhaften Ausführungsform der Erfindung ist mindestens ein wellenlängenselektives Bauteil, insbesondere das fluoreszenzreduzierende Element, als das Messvolumen entlang des Strahlenganges begrenzendes Bauteil ausgebildet.

Alternativ oder zusätzlich ist das fluoreszenzreduzierende Element, insbesondere mit einem strahlungsrichtungsselektiven Element, ausgestattet. Hierdurch wird über die Ausnutzung der unterschiedlichen Winkelverteilung Fluoreszenzstrahlung zumindest überwiegend reduziert, während die zu messende Strahlung zumindest überwiegend durch das fluoreszenzreduzierende Element unverändert durchtritt und gemessen werden kann, ohne dass die Messung am Detektor durch Fluoreszenzstrahlung nennenswert beeinflusst wird. Dies kann erfindungsgemäß insbesondere durch einen optischen Raumfilter gelöst werden.

Gemäß einer bevorzugten Ausführungsform der vorliegenden Erfindung setzt der Detektor zur Messung der wellenlängenbezogenen Absorption des von der Quelle ausgegebenen und durch das Messvolumen getretenen Quellspektrums durch eine elektrische Strommessung das auf dem Detektor auftreffende Messspektrum in einen Fotostrom um. Hierzu wird insbesondere ein Photomultiplier, ein Photodiodenhalbleiter und/oder eine Vakuumröhre verwendet. Alternativ sind bolometrische Verfahren denkbar, da auf den Detektor ein auf die Messwellenlänge wellenlängenselektiertes Messspektrum auftrifft. Als Detektor kann insbesondere ein Bolometer verwendet werden.

Erfindungsgemäß wird als Messwellenlänge insbesondere die Wellenlänge betrachtet, die bei arithmetischer Mittelung der, vorzugsweise mit der jeweiligen Strahlungsintensität gewichteten, Wellenlänge bei vernachlässigbarer Absorption einer Zielsubstanz (deren Stoffkonzentration gemessen wird) von einem Detektor, insbesondere ohne Möglichkeit der weiteren Wellenlängenselektion, registriert wird.

Die Messwellenlänge liegt erfindungsgemäß insbesondere zwischen 200nm und 15$\mu$m, vorzugsweise zwischen 250nm und 320nm, noch bevorzugter bei 280nm +/- 5nm und/oder 260nm +/- 5nm und/oder 254nm +/- 5nm, noch bevorzugter bei 280nm +/- 0,1nm.

Als Halbwertbreite wird erfindungsgemäß insbesondere der in Wellenlänge gemessene Abstand zwischen den Punkten im Intensitätsspektrum angesehen, an denen die Intensität der Messstrahlung des Messspektrums auf die Hälfte ihres Maximalwertes abgefallen ist. Die Halbwertsbreite beträgt erfindungsgemäß insbesondere maximal 1/5 der Messwellenlänge, vorzugsweise maximal 1/10 der Messwellenlänge, noch bevorzugter maximal 1/50 der Messwellenlänge.

Die Tausendstelbreite der Messstrahlung ist erfindungsgemäß insbesondere der in Wellenlänge gemessene Abstand zwischen den Punkten im Intensitätsspektrum, an denen die Intensität der Messstrahlung des Messspektrums auf ein Tausendstel ihres Maximalwertes abgefallen ist. Die Tausendstelbreite beträgt erfindungsgemäß insbesondere maximal die Hälfte der Messwellenlänge, vorzugsweise maximal ein Viertel der Messwellenlänge.

Gemäß einer vorteilhaften Ausführungsform der Erfindung sind Mittel zur Reduzierung von bezogen auf die Messwellenlänge kurzwelliger und/oder langwelliger Strahlung mindestens um einen Faktor 2, vorzugsweise mindestens um einen Faktor 10, noch bevorzugter mindestens um einen Faktor 100, bezogen auf die eingestrahlte Leistungsdichte der Messwellenlänge vor dem Eintritt in das Messvolumen vorgesehen.

Erfindungsgemäß findet zwischen dem Messvolumen und dem Detektor eine Wellenlängenselektion statt, wobei insbesondere zumindest langwellig zur Messwellenlänge das Quellspektrum begrenzt wird, vorzugsweise mit einem Abfall um mindestens einen Faktor 2, vorzugsweise mindestens um einen Faktor 10, noch bevorzugter mindestens um einen Faktor 100, bezogen auf die Messwellenlänge. Der Abfall erfolgt insbesondere in einer Umgebung um die Messwellenlänge, der insbesondere 50/100, vorzugsweise 2/100 beträgt.

Vorrichtungsgemäß offenbarte Merkmale sollen auch als Verfahrensmerkmale als eigenständige oder kombinierte Erfindung offenbart gelten und umgekehrt. Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:

Figur 1    eine schematische, perspektivische Darstellung einer ersten Ausführungsform einer erfindungsgemäßen Messvorrichtung und

Figur 2    eine schematische, perspektivische Darstellung einer zweiten Ausführungsform der erfindungsgemäßen Messvorrichtung.

In den Figuren sind gleiche und gleichwirkende Bauteile/Merkmale mit den gleichen Bezugszeichen gekennzeichnet.

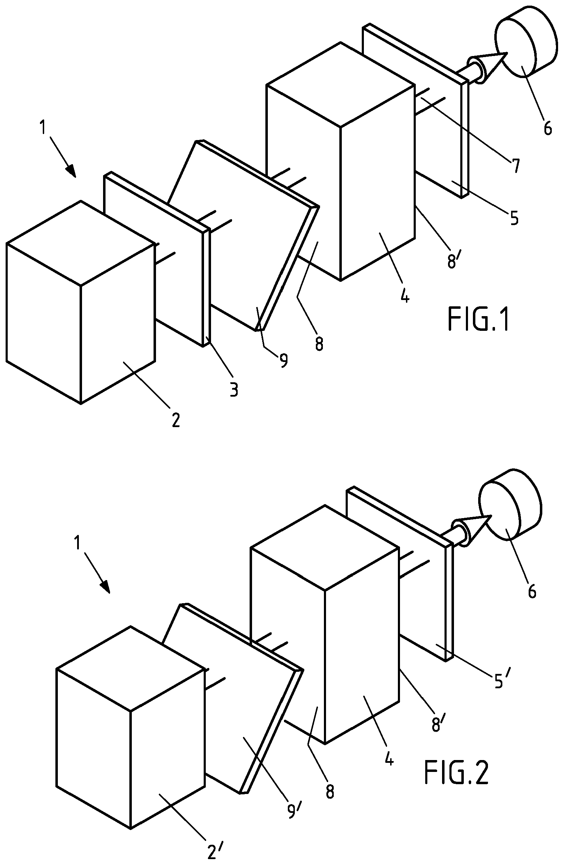

In der Figur 1 ist eine Quelle 1 dargestellt, die aus einer Lichtquelle 2 und einem wellenlängenselektiven optischen Element 3 gebildet ist. Die Lichtquelle 2 ist als breitbandige Lichtquelle ausgebildet, die ein breitbandiges Quellspektrum mit einem Strahlengang 7 ausgibt, der, insbesondere linear, bis zu einem Detektor 6 verläuft.

Zwischen der Quelle 1 und dem Messvolumen 4 ist ein Strahlenteiler 9 angeordnet, wobei der Strahlenteiler 9 zwischen dem optischen Element 3 der Quelle 1 und dem Messvolumen 4 angeordnet ist. Der Strahlenteiler 4 teilt den eingehenden Lichtstrahl in einen ersten Teilstrahl auf, der entlang des Strahlengangs 7 weiterläuft, und einen zweiten Teilstrahl (nicht dargestellt) auf, der in einer anderen Richtung weiterläuft. Dieser zweite Teilstrahl kann senkrecht zum Strahlengang 7 verlaufen und insbesondere auf einen Referenzdetektor (nicht dargestellt) treffen, durch den der zweite Teilstrahl ausgewertet wird.

Das breitbandige Quellspektrum der Lichtquelle 2 trifft auf das wellenlängenselektive optische Element 3 und beim Durchtritt durch das wellenlängenselektive optische Element 3 wird Strahlungsleistung kurzwellig zu einer Messwellenlänge von 280nm deutlich reduziert. Das wellenlängenselektive Element 3 verlässt ein schmalbandiges Quellspektrum mit einer überwiegenden Leistungsdichte in einem Wellenlängenbereich von über 250nm. In diesem Bereich sind vorzugsweise über 90% der eingestrahlten Leistungsdichte.

Das zumindest unterhalb der Messwellenlänge begrenzte schmalbandige Quellspektrum trifft entlang des Strahlengangs 7 auf ein Messvolumen 4. Das Messvolumen 4 wird durch einen Messraum begrenzt, der zumindest in Richtung des Strahlengangs 7 quer zum Strahlengang 7 angeordnete Fenster 8, 8' aufweist. Die Fenster 8, 8' sind vorzugsweise orthogonal zum Strahlengang 7 angeordnet und weisen bevorzugt einen definierten Abstand entlang des Strahlengangs 7 auf. Der Abstand entspricht der Schichtdicke, durch welche das schmalbandige Spektrum entlang des Strahlengangs 7 durch ein in dem Messvolumen angeordnetes Fluid durchtritt.

Das Fluid ist entweder in dem Messvolumen 4 statisch oder quer zum Strahlengang 7 strömend angeordnet.

Das Fluid weist eine zu bestimmende Stoffkonzentration eines Stoffes (Zielsubstanz), bevorzugt Tryptophan, auf, der eine durch den Detektor 6 messbare Veränderung an dem durch das Messvolumen 4 durchtretenden schmalbandigen Quellspektrum im Messwellenlängenbereich hervorruft.

Das schmalbandige Quellspektrum kann in dem Messvolumen 4 eine, insbesondere durch die Zielsubstanz erzeugte, Fluoreszenz bewirken, die unter anderem entlang des Strahlengangs 7 zu einer Verfälschung der von dem Detektor 6 zu messenden Signale führen kann, insbesondere in einem Spektrum mit einer Wellenlänge oberhalb der Messwellenlänge.

Aus diesem Grund ist in Strahlengangrichtung hinter dem Messvolumen 4 ein weiteres, wellenselektives optisches Element in Form eines fluoreszenzreduzierenden Elements 5 im Strahlengang angeordnet. Beim Durchtritt des durch das Messvolumen 4 getretenen schmalbandigen Quellspektrums wird etwaige im Messvolumen 4 erzeugte Fluoreszenzstrahlung zumindest überwiegend, vorzugsweise weitgehend, noch bevorzugter vollständig, absorbiert. Somit trifft auf den Detektor 6 zumindest überwiegend, vorzugsweise praktisch ausschließlich das für die Messung der Stoffkonzentration vorgesehene, insbesondere kurzwellig und langwellig begrenzte, schmalbandige Spektrum, das seine Leistungsdichte zumindest überwiegend im Messwellenlängenbereich hat. Das Messspektrum hat bei der Messwellenlänge bevorzugt ein Maximum der Leistungsdichte.

Das fluoreszenzreduzierende Element 5 ist bevorzugt bei 280nm +/- 5nm und/oder 260nm +/- 5nm und/oder 254nm +/- 5nm selektiv.

Der Detektor 6 misst das aus dem Messvolumen 4 und durch das fluoreszenzreduzierende Element 5 getretene Licht durch Umsetzung in einen Photostrom über eine elektrische Strommessung, insbesondere einen Photomultiplier. Hieraus kann auf die Stoffkonzentration der Zielsubstanz geschlossen werden.

Die in Figur 2 gezeigte Ausführungsform unterscheidet sich von der in Figur 1 beschriebenen Ausführungsform dadurch, dass als Quelle 1 eine schmalbandige Lichtquelle 2' vorgesehen ist, so dass auf ein wellenlängenselektives optisches Element 3 bei dieser Ausführungsform verzichtet werden kann. Die Lichtquelle 2' gibt bereits ein zumindest überwiegend im Messwellenlängenbereich strahlendes Quellspektrum aus und umfasst somit das vor dem Messvolumen 4 angeordnete wellenlängenselektive Mittel.

Zwischen der Quelle 1 und dem Messvolumen 4 ist ein Strahlenteiler 9' angeordnet, wobei der Strahlenteiler 9' zwischen der Lichtquelle 2' und dem Messvolumen 4 angeordnet ist. Der Strahlenteiler 4 teilt den eingehenden Lichtstrahl in einen ersten Teilstrahl auf, der entlang des Strahlengangs 7 weiterläuft, und einen zweiten Teilstrahl (nicht dargestellt) auf, der in einer anderen Richtung weiterläuft. Dieser zweite Teilstrahl kann senkrecht zum Strahlengang 7 verlaufen und insbesondere auf einen Referenzdetektor (nicht dargestellt) treffen, durch den der zweite Teilstrahl ausgewertet wird.

Das fluoreszenzreduzierende Element 5' ist bei dieser Ausführungsform bevorzugt zumindest überwiegend, vorzugsweise quasi ausschließlich langwellig zur Messwellenlänge selektiv.

Bezugszeichenliste

| | |
|---|---|
| 1 | Quelle |
| 2, 2' | Lichtquelle |
| 3 | wellenlängenselektives optisches Element |
| 4 | Messvolumen |
| 5, 5' | fluoreszenzreduzierendes Element |
| 6 | Detektor |
| 7 | Strahlengang |
| 8, 8' | Fenster |
| 9, 9' | Strahlenteiler |

**Patentansprüche**

1. Messvorrichtung zur Bestimmung einer Stoffkonzentration eines in einem Messvolumen (4) angeordnetes Fluids mit:

   - einer ein Quellspektrum ausgebenden Quelle (1),
   - einem vor dem Messvolumen angeordneten wellenlängenselektiven Mittel,
   - einem das Messvolumen (4) zumindest in einem Strahlengang (7) begrenzenden Messraum und
   - einem Detektor (6) zur Messung einer wellenlängenbezogenen Absorption eines durch das Messvolumen (4) getretenen Messspektrums,

   **dadurch gekennzeichnet, dass**
   zwischen dem Detektor (6) und dem Messvolumen (4) ein fluoreszenzreduzierendes Element (5) im Strahlengang (7) angeordnet ist, wobei zwischen der Quelle (1) und dem Messvolumen (4) ein Strahlenteiler (9, 9') angeordnet ist.

2. Messvorrichtung nach Anspruch 1, wobei das fluoreszenzreduzierende Element (5) eine Fluoreszenz zumindest überwiegend, vorzugsweise quasi vollständig, absorbierend ausgebildet ist.

3. Messvorrichtung nach Anspruch 1 oder 2, wobei das fluoreszenzreduzierende Element (5) die Intensität der Messstrahlung im Messwellenlängenbereich höchstens um einen Faktor 10, vorzugsweise höchstens um einen Faktor 5, reduzierend ausgebildet ist..

4. Messvorrichtung nach einem der vorhergehenden Ansprüche, wobei das fluoreszenzreduzierende Element (5) mindestens einen, insbesondere an einem Filterrad angeordneten, Filter und/oder einen Monochromator aufweist.

5. Messvorrichtung nach einem der vorhergehenden Ansprüche, wobei die Quelle (1) als

   a) schmalbandige Lichtquelle (2') oder
   b) breitbandige Lichtquelle (2) mit nachgeschaltetem wellenlängenselektiven optischen Element (3)

   ausgebildet ist.

6. Messvorrichtung nach einem der vorgehenden Ansprüche, **dadurch gekennzeichnet, dass** die Messvorrichtung ein Messspektrum zwischen 200 nm und 15 $\mu$m, insbesondere zwischen 250 nm und 320 nm, vorzugsweise von 280 nm +/- 5 nm und/oder 260 nm +/- 5 nm und/oder 254 nm +/- 5 nm messend ausgebildet ist.

7. Messvorrichtung nach einem der vorhergehenden Ansprüche, wobei der Detektor (6) eine Messwellenlänge zwischen 200 nm und 15 $\mu$m, insbesondere zwischen 250 nm und 320 nm, vorzugsweise von 280 nm +/- 5 nm und/oder 260 nm +/- 5 nm und/oder 254 nm +/- 5 nm messend ausgebildet ist.

8. Verfahren zur Bestimmung einer Stoffkonzentration eines in einem Messvolumen (4) angeordneten Fluids mit folgenden Schritten, insbesondere folgendem Ablauf:

   - Ausgeben eines Quellspektrums mit einem zumindest teilweise durch das Messvolumen (4) verlaufenden Strahlengang (7), wobei wellenlängenselektive Mittel vor dem Messvolumen vorgesehen sind,
   - Messung einer wellenlängenbezogenen Absorption eines durch das Messvolumen (4) getretenen Messspektrums mittels eines Detektors (6),

   **dadurch gekennzeichnet, dass** zwischen dem Detektor (6) und dem Messvolumen (4) eine Fluoreszenz im Strahlengang (7) reduziert wird, wobei zwischen der Quelle (1) und dem Messvolumen (4) ein Strahlenteiler (9, 9') angeordnet wird.

FIG.1

FIG.2

Europäisches Patentamt
European Patent Office
Office européen des brevets

## EUROPÄISCHER RECHERCHENBERICHT

Nummer der Anmeldung

EP 19 19 1934

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2019 101137 U1 (WI TEC SENSORIK GMBH [DE]) 13. März 2019 (2019-03-13)<br>* Zusammenfassung; Abbildung 4 *<br>* Absätze [0048] - [0064] *<br>----- | 1-8 | INV.<br>G01N21/31<br>G01N21/33 |
| X | DE 10 2014 106748 A1 (OPTEK DANULAT GMBH [DE]) 19. November 2015 (2015-11-19)<br>* das ganze Dokument *<br>----- | 1-8 | |
| A | US 2018/224334 A1 (O'ROURKE PATRICK E [US] ET AL) 9. August 2018 (2018-08-09)<br>* Absätze [0042] - [0050]; Abbildung 1 *<br>----- | 1-8 | |

RECHERCHIERTE SACHGEBIETE (IPC)

G01N

Der vorliegende Recherchenbericht wurde für alle Patentansprüche erstellt

| Recherchenort | Abschlußdatum der Recherche | Prüfer |
|---|---|---|
| München | 18. Februar 2020 | Passier, Martinus |

**ANHANG ZUM EUROPÄISCHEN RECHERCHENBERICHT
ÜBER DIE EUROPÄISCHE PATENTANMELDUNG NR.**

EP 19 19 1934

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2020

| Im Recherchenbericht angeführtes Patentdokument | Datum der Veröffentlichung | Mitglied(er) der Patentfamilie | Datum der Veröffentlichung |
|---|---|---|---|
| DE 202019101137 U1 | 13-03-2019 | KEINE | |
| DE 102014106748 A1 | 19-11-2015 | DE 102014106748 A1<br>EP 3143382 A1<br>WO 2015172977 A1 | 19-11-2015<br>22-03-2017<br>19-11-2015 |
| US 2018224334 A1 | 09-08-2018 | KEINE | |

Für nähere Einzelheiten zu diesem Anhang : siehe Amtsblatt des Europäischen Patentamts, Nr.12/82

EPO FORM P0461